(19) **Europäisches Patentamt**
**European Patent Office**
**Office européen des brevets**

(11) Publication number : **0 469 903 A2**

# (12) EUROPEAN PATENT APPLICATION

(21) Application number : **91307064.5**

(22) Date of filing : **01.08.91**

(51) Int. Cl.$^5$ : **B03B 9/06,** B03B 5/62, B29B 17/00

(30) Priority : **01.08.90 IT 2116390**

(43) Date of publication of application :
**05.02.92 Bulletin 92/06**

(84) Designated Contracting States :
**AT BE CH DE DK ES FR GB GR IT LI LU NL SE**

(71) Applicant : **CENTRO SVILUPPO SETTORI IMPIEGO S.r.l.**
**31, Foro Buonaparte**
**I-20121 Milan (IT)**
Applicant : **MILANI RESINE S.p.A.**
**19/21 Via Sabotino**
**I-21054 Fagnano Olona, Varese (IT)**

(72) Inventor : **Vezzoli, Annibale**
**1/A, via Vezzoli**
**I-22060 Carugo, Como (IT)**
Inventor : **Lamperti, Marino**
**1 Via Papa**
**I-20061 Carugate, Milan (IT)**
Inventor : **Milani, Francesco**
**19 Via Liberta**
**I-21015 Lonate Pozzolo, Varese (IT)**
Inventor : **Albrisi, Bruno**
**1 Via Volta**
**I-21015 Lonate Pozzolo, Varese (IT)**

(74) Representative : **Jones, Helen Marjorie Meredith et al**
**Gill Jennings & Every 53-64 Chancery Lane London WC2A 1HN (GB)**

(54) **Process and apparatus for separating a mixture of plastic material into fractions.**

(57)   A process and apparatus for separating heterogeneous plastic material coming from industrial and/or town recovery, into homogeneous fractions at least as regards the specific gravity. The process comprises feeding the plastics material to a selection tank equipped with a plurality of collecting areas arranged on its bottom, operating with a selective liquid stream flow in an essentially closed cycle.

EP 0 469 903 A2

The present invention relates to a process for separating heterogeneous plastic material, coming from industrial and/or town recovery, into homogeneous fractions.

"Heterogenous plastic material", whenever used in the present specification and in the appended claims, means a mixture of thermoplastic and/or thermosetting polymers such as (high, medium, low density) polyethylene, polypropylene, polystyrene, foamed polystyrene, PVC, PET, ABS, polyester resins, polyamides, etc., obtained, after a first separation, from solid town wastes, or from a differentiated collection, or coming from the conversion industry as production wastes.

A growing awareness of ecological and environmental factors has led to greater consideration of the serious problems of disposal of the plastic materials which are present in the town solid wastes.

In Italy, at present, the production of town solid wastes is growing by about 1% per year and is now evaluated at approximately 18 to 20 million tons per year, 1.4 million tons of which (about 7.5%) are plastics.

Recycling of such a large amount of waste material would not only decrease the total waste volume but would also enable recovery of the residual use value of the plastics. Economical advantages would therefore arise from both a decrease in the total waste volume for disposal and in the decrease in the consumption of fresh plastics material. Furthermore, there would also be a possibility that the energy content of the plastics could be recovered at the end of their life cycle, by incineration in a furnace suitable for heat recovery.

The main problem associated with the recycling and the recovery of plastics materials is that of its separation into homogeneous fractions, preferably comprising the same type of polymer or, at least, comprising polymers having a similar specific gravity. In particular, continuous and as much as possible automated processes are required.

The Applicants have now found that the abovementioned problem can be solved by using suitable selection tanks, on the bottom of which two or more collecting areas are arranged and in the inside of which a selective fluid can circulate. The tank and fluid circulation are arranged so that the motion and density of the selective fluid produces a controlled collection of plastic materials having a high specific weight.

Thus, it is an object of the present invention to provide a process for separating heterogeneous plastic material into substantially homogeneous fractions, characterised in that triturated plastic material is fed to a selection tank which comprises at least two collecting areas located at the bottom of the tank, a selective liquid stream flows in a substantially closed cycle in the tank and the separated material is collected from the collecting areas. The selection tank is preferably as described below.

A further object of the present invention is an apparatus for separating heterogeneous plastic material into substantially homogeneous fractions which comprises:

a) a selection tank which, in use, is continuously fed with a selective, substantially recirculating liquid, which is capable of generating a stream flow, said tank comprising an inlet section and an outlet section for the liquid and, on the bottom, a plurality of collecting areas for the separated plastic material arranged in sequence in the direction of the liquid flow path;

b) means suited to feed the triturated hetergeneous plastic material, which are positioned at the inlet section of the tank;

c) a recycling pump for the selective liquid;

d) means suited to recover the selected plastic material, which are positioned at each collecting area,

Optionally, the apparatus additionally comprises means capable of increasing the stream flow of the selective liquid inside the tank.

The selection tank preferably comprises a parallelepiped, the dimensions of which depend on the flowrates of plastic material to be treated and on the required degree of accuracy of the separation. However, tanks having a length from 2 to 12 meters, a height and a width from 0.5 to 2 meters are the most suitable for the apparatus of the present invention.

In use, the plastic material is triturated and fed into the tank, preferably through a hopper which, in turn, is preferably fed by a belt conveyor or a screw conveyor. Inside the tank, the light material fraction floats on the liquid and is carried by the liquid flow to the outlet section, while the elements forming the heavy fraction fall out of the liquid stream to the bottom following substantially parabolic trajectories as they are carried along by the stream flow.

Materials having identical or similar specific gravities fall out of the liquid stream towards the bottom of the tank following substantially like trajectories and therefore generally deposit in the same collecting area.

The trajectory of a particular piece of plastic material depends not only on the stream flow and on the rate of falling which in turn depends on the plastic material specific gravity, but also on the dimensions of the triturated particles and on the presence, if any, of turbulence in the liquid mass. The apparatus comprises at least 2, preferably more than 2 and generally no more than 20 collecting areas. The collecting areas generally exhibit a substantially conical shape, with the vertex turned upside-down and a valve is provided towards, preferably at, the vertex of the cone for discharging the separated fraction of plastics material.

The separated fraction of material is recovered from the discharge of each collecting area, for example in proper containers and is carried away according to known methods, for example by means of conveyance screws or a liquid flow. Preferably the tank has substantially the form of a parallelepiped and the collecting areas are arranged in sequence, one following the other, and each of them preferably extends across the full width of the tank.

Although it is possible to use water as a selective fluid in the process of the present invention, best results are obtained when other liquids are utllized, for example glycols, water/glycols mixtures, water/sodium chloride mixtures, water/non-foaming surfactants mixtures, and the like. During the separation process, the selective liquid, which is introduced at the inlet section at one end of the tank and is discharged at the other end (outlet section), fills the tank almost completely.

The liquid flow is secured and controlled by the recirculation pump and, if necessary, by external means, for example paddle wheels, rotating at a prefixed speed and which may be partially or totally immersed in the liquid. Generally it is preferable to have a liquid flow having an average speed in the range from 0.05 to 1 m/second.

In order to influence the flow of the fluid and to generate ascensional currents and whirls capable of regulating the fall of the heavy plastic material, bulkheads can be arranged on the tank bottom. These bulkheads can serve to separate the individual collecting areas from one other. Preferably the collecting areas extend across the entire width of the tank and have a height ranging from 20 to 50% of the height of the tank.

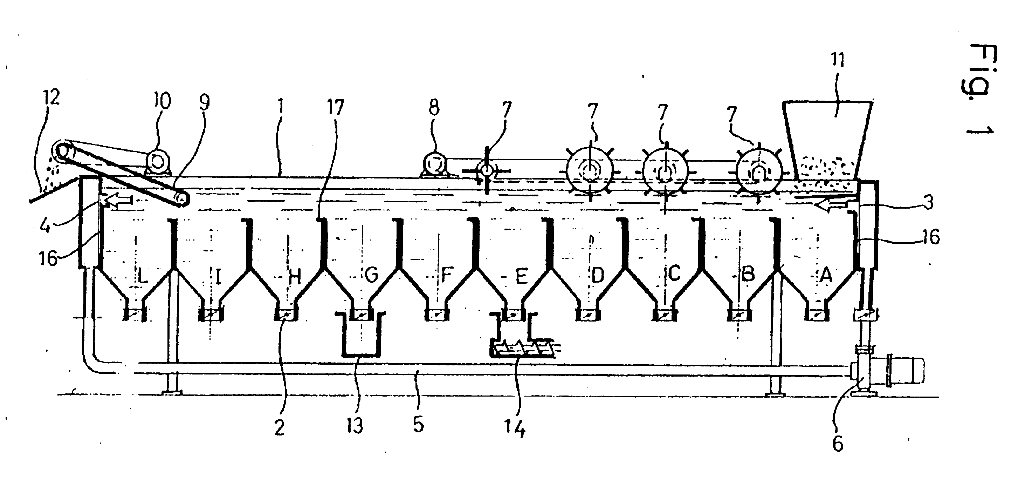

The process and the apparatus for selecting heterogeneous plastic material into homogeneous fractions according to the present invention can be better understood from the following detailed description, in which reference is made to figure 1.

Figure 1 represents a vertical cross sectional view of a preferred, illustrative but not limitative embodiment of the apparatus of the present invention.

The apparatus illustrated in Figure 1 comprises a tank (1) equipped with collecting areas A, B, C etc. each having a substantially conical bottom and closed on the bottom by valves (2).

At the beginning and at the end of the tank, openings (3) and (4) are provided for introducing and discharging the selective liquid.

This flow can be throttled by means of adjustable or replaceable sluice-gates (16).

Also the collecting areas A, B, C etc. are defined by bulkheads (17) in order to influence the flow of the liquid and to generate ascensional currents and whirls.

The flow of the selective liquid in the direction of the arrows is controlled not only by pump (6) and piping (5), but also by paddle wheels (7), which are driven at a prefixed speed by motion units (8).

The material to be separated is introduced through hopper (11) and while being carried along by the liquid stream, deposits onto the tank bottom in the collecting areas, depending on its own specific gravity.

The heavier material will deposit in the first collecting areas, while the less heavy material will deposit in the subsequent areas.

The material having a lower specific gravity, still floating on the liquid, will be collected by belt (9), which is driven by unit (10), and will be discharged onto chute (12).

The material which will deposit onto the bottom of the collecting areas can be recovered by opening valves (2) and collected into containers (13), which can be for example, water flow channels, or into conveying screws (14).

## Claims

1. A process for separating heterogeneous plastic material into substantially homogeneous fractions, characterised in that triturated plastic material is fed to a selection tank which comprises at least two collecting areas located on the bottom of the tank, a selective liquid stream flows in a substantially closed cycle in the tank and the separated material is collected from the collecting areas.

2. The process according to claim 1, wherein the selective liquid comprises a glycol or mixture of glycols, a water/glycol mixture, a water/sodium chloride mixture, a water/non-foaming surfactant mixture.

3. The process according to claim 1 or claim 2, wherein the selective liquid substantially fills the tank.

4. The process according to any preceding claim, wherein the selective liquid flow has an average speed ranging from 0.05 to 1 m/second.

5. An apparatus for separating heterogeneous plastic-material into substantially homogeneous fractions, which comprises:
   a) a selection tank, which, in use, is continuously fed with a selective, substantially recirculating liquid, which is capable of generating a stream flow, said tank comprising an inlet and an outlet section for the liquid and, on the bottom, a plurality of collecting areas for the separated plastic material arranged in the direction of the liquid flow path;
   b) means suited to feed triturated hetergeneous plastic material into the tank, which are positioned at the inlet section of the tank;
c) a recycling pump for the selective liquid;
d) means suited to recover the separated plastic material which are located at each collecting area.

6. The apparatus according to claim 5, wherein the selection tank has the form of a parallelepiped.

7. The apparatus according to claim 5 or 6, additionally comprising a hopper for charging the triturated plastic material into the tank, in use, the hopper being fed by a belt conveyor or a screw conveyor.

8. The apparatus according to claim 5, 6 or 7, wherein there are from a minimum of 2 to a maximum of 20 collecting areas in the tank and the collecting areas exhibit a substantially conical shape with the vertex turned upsidedown, and are equipped with a valve for discharging the selected material towards the vertex of each one.

9. The apparatus according to any of claims 5 to 8, wherein the means suited to recover the separated plastic material comprise conveying screws.

10. Apparatus according to any of claims 5 to 9 additionally comprising means capable of increasing the stream flow of the selective liquid inside the tank.

11. The apparatus according to claim 10, wherein the means suited to increase the stream flow inside the tank comprise paddle wheels driven at a prefixed speed and partially or completely immersed in the liquid.

12. The apparatus according to any claims 5 to 11, wherein the separation tank comprises bulkheads arranged on the tank bottom and which serve to separate the collecting areas from one another.

13. A process according to any of claims 1 to 4 using an apparatus according to any of claims 5 to 12.

14. Use of an apparatus according to any of claims 5 to 12 or a process according to any of claims 1 to 4 to separate a heterogeneous mixture of plastics materials into substantially homogeneous functions.

Fig. 1